# EUROPÄISCHE PATENTSCHRIFT

(11) **EP 2 298 597 B1**
(45) Veröffentlichungstag und Bekanntmachung des Hinweises auf die Patenterteilung: **20.03.2013**
(21) Anmeldenummer: 09170703.4
(22) Anmeldetag: 18.09.2009
(51) Int. Cl.: B60P 1/64, B62D 65/02

(54) **Fahrzeug, insbesondere Fahrzeuganhänger**
Vehicle, in particular vehicle trailer
Véhicule, notamment remorque de véhicule

(43) Veröffentlichungstag der Anmeldung: 23.03.2011
(73) Patentinhaber: Humbaur GmbH, 86368 Gersthofen (DE)
(72) Erfinder: Humbaur, Ulrich, 86368 Gersthofen (DE)
(74) Vertreter: Ernicke, Klaus Stefan

(56) Entgegenhaltungen:
- EP-A1- 1 245 476
- EP-A1- 1 634 798
- DE-B3-102007 025 041
- DE-U1-202006 003 228
- US-A1- 2008 035 814
- US-B1- 6 199 894

## Beschreibung

Die Erfindung betrifft ein Fahrzeug, insbesondere einen Fahrzeuganhänger, mit den Merkmalen im Oberbegriff des Hauptanspruchs.

Derartige Fahrzeuganhänger, insbesondere Sattelauflieger, sind aus der Praxis bekannt. Sie bestehen aus einem Fahrgestell und einem Fahrwerk sowie einer Zugeinrichtung, z. B. einer Auflieger- oder Scheuerplatte und einem Königszapfen. Das Fahrgestell ist starr und einteilig ausgebildet. Es besteht aus parallelen Längsträgern, die mit mehreren Querträgern untereinander verbunden und ausgesteift sind. Derartige Fahrzeuganhänger sind hinsichtlich der Reparaturfreundlichkeit, der wirtschaftlichen Fertigung, der Steuergesetzgebung und der Variabilität nicht optimal.

Aus der DE 102 10 147 C1und US 2008/0035814 ist ein mehrteiliges Fahrgestell eines LKW's bekannt, bei dem plan aneinander liegende Längsträger mit einem Schraubraster verbunden werden.

Es ist Aufgabe der vorliegenden Erfindung, ein besseres Fahrzeug aufzuzeigen.

Die Erfindung löst diese Aufgabe mit den Merkmalen im Hauptanspruch.

Die modulare Ausbildung des Fahrgestells mit zwei oder mehr Baugruppen hat den Vorteil, dass die Baugruppen eine kleinere und handlichere Größe haben und sich getrennt herstellen lassen. Die Baugruppen können auch einer Oberflächenbehandlung, z.B. einer Vollverzinkung, unterworfen werden. Anfallende Schweißarbeiten können an den Baugruppen vor der Verzinkung und vor der späteren Montage durchgeführt werden, wobei sich durch die kleinere und kürzere Baugröße weniger Verzüge ergeben, die zudem nur in der Vorfertigung auftreten. Die Baugruppen, insbesondere ein Frontteil und ein Mittelteil, können nach ihrer Einzelfertigung lösbar und ohne Schweißarbeiten oder sonstige Fertigungs- und Temperatureinflüsse montiert und miteinander verbunden werden.

Der modulare Aufbau hat ferner den Vorteil, dass die Fahrgestelle variabler sind und sich besser an die bestehenden Erfordernisse und Einsatzzwecke des Fahrzeuganhängers anpassen lassen. Die Frontteile können als Schwanenhals mit erhabenen Längsträgern ausgebildet sein oder eine geeignete und ggf. flachere Bauform haben. Die Mittelteile können mit unterschiedlichen Fahrwerken und insbesondere Achsgruppen ausgerüstet sein. Sie lassen sich mit verschiedenen Frontteilen kombinieren, die sich z.B. an unterschiedliche zulässige Gesamtgewichte, Auflagelasten oder dgl. anpassen lassen. Auch eine Anpassung an unterschiedliche Aufbauten ist möglich.

Die modulare Bauform hat ferner den Vorteil, dass im Schadensfall nur die beschädigte Baugruppe repariert und ggf. komplett ausgetauscht wird. In steuerrechtlicher Hinsicht ergeben sich Vorteile durch einen Import der getrennten Baugruppen und eine Montage im Land. Baugruppen sind häufig steuerbegünstigt gegenüber kompletten Fahrzeuganhängern.

Durch die modulare Bauform ergibt sich die Möglichkeit eines Baukastensystems zur Herstellung unterschiedlicher Anhängertypen mit minimalem Aufwand und maximaler Variationsbreite. Auch ein nachträgliches Umrüsten oder Umbauen von Fahrzeugen ist möglich.

Die Fahrgestellbaugruppen, insbesondere das Frontteil und das Mittelteil können an der Verbindungsstelle zur Aufnahme der Stützkräfte eine formschlüssige Abstützung aufweisen, welche die Verbindungselemente entlastet und die im Betrieb einwirkenden Kräfte zu einem großen Teil aufnimmt. Die formschlüssige Abstützung besteht vorteilhafterweise aus Stützplatten oder Scherplatten, die mit Erhebungen und Vertiefungen, insbesondere Leisten und Nuten formschlüssig ineinander greifen und die Kräfte übertragen. Dies ist vor allem für eine Aufnahme und Übertragung der vertikalen Lasten und Auflagekräfte günstig. Die ggf. niedrigeren Zugkräfte können z.B. über geeignete Verbindungselemente zwischen den Stützplatten übertragen werden. Hierfür eignen sich besonders Schließringbolzen, die das Verbindungsspiel aufnehmen und besonders gut auf Scherung belastbar sind und die Querkräfte übertragen.

Das modulare Fahrgestell kann einen oder mehrere Auszüge aufweisen, insbesondere einen Heckauszug oder eine Frontauszug. Hierdurch kann das Fahrgestell in seiner Länge an unterschiedliche Aufbauten angepasst werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: ein Fahrgestell in Form eines multifunktionalen Trägerchassis mit modularem Aufbau in perspektivischer Ansicht,
- Figur 2 und 3:: die zugehörige Draufsicht und Seitenansicht von Figur 1,
- Figur 4 und 5:: weitere Anhängervarianten in Seitenansicht,
- Figur 6:: eine Frontansicht des Fahrgestells gemäß Pfeil VI von Figur 3,
- Figur 7:: einen Schnitt durch die Verbindungsstelle von Fahrgestellbaugruppen gemäß Schnittlinie VII-VII von Figur 3,
- Figur 8:: eine vergrößerte Detaildarstellung des Ausschnitts VIII von Figur 7,
- Figur 9:: eine perspektivische Darstellung eines Frontteils des Fahrgestells,
- Figur 10 und 11:: die zugehörige Draufsicht und Seitenansicht des Frontteils von Figur 9,
- Figur 12:: eine perspektivische Ansicht eines Mittelteils des Fahrgestells
- Figur 13 und 14:: die Seitenansicht und Draufsicht des Mittelteils von Figur 12 und
- Figur 15:: eine weitere Anhängervariante in Seitenansicht.

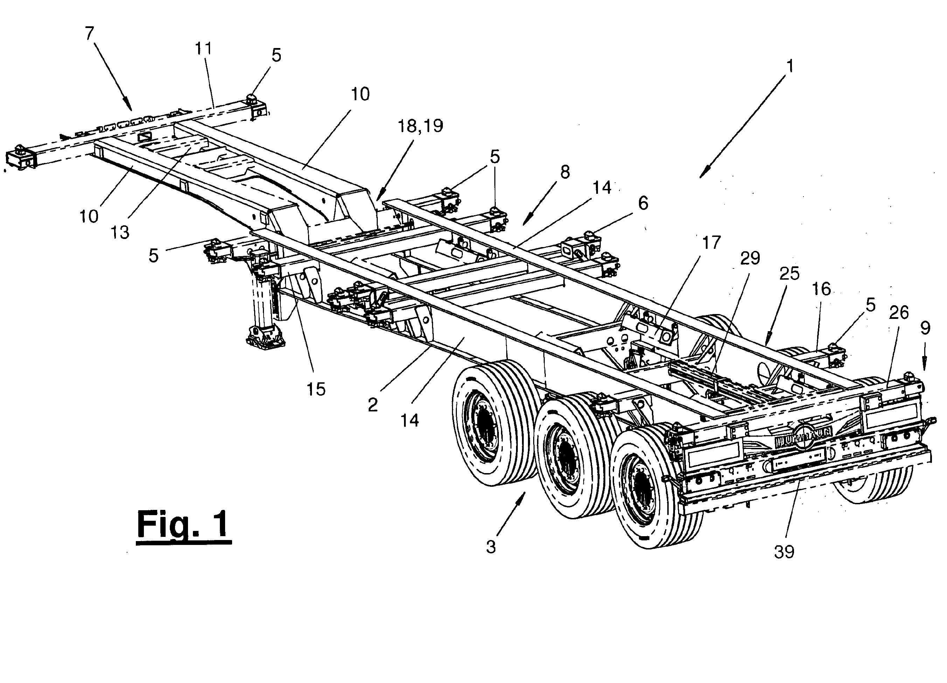

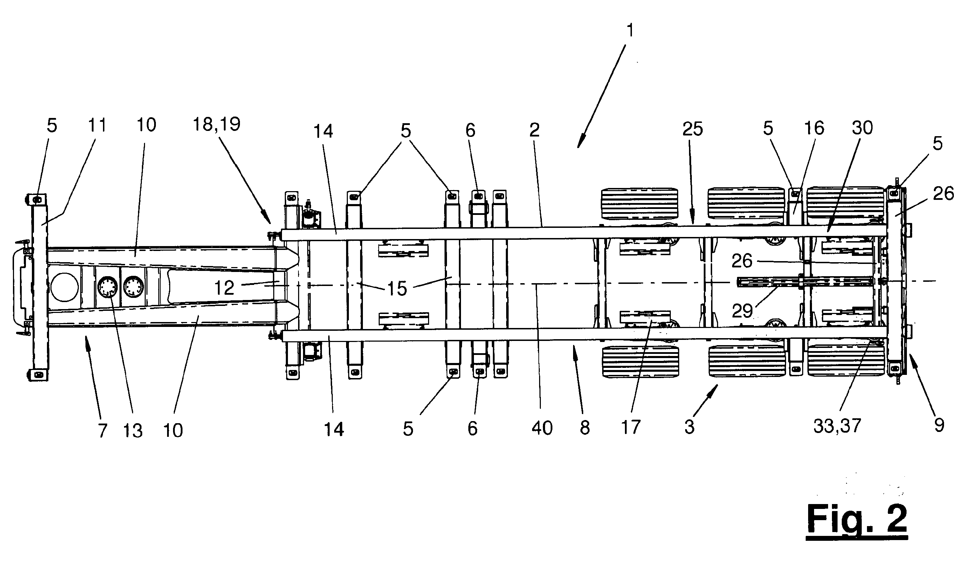

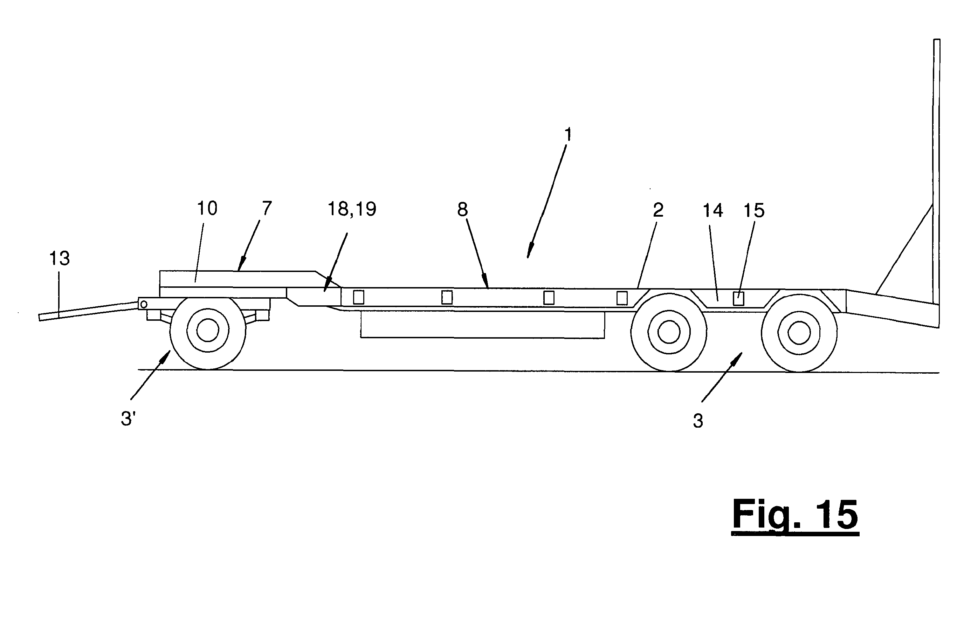

Die Erfindung betrifft ein Fahrzeug (1), insbesondere einen Fahrzeuganhänger. Der Fahrzeuganhänger ist in der gezeigten Ausführungsform von Figur 1 bis 5 als Sattelauflieger ausgebildet, der eine Zugeinrichtung (13) in Form einer Scheuerplatte oder Auflageplatte und einem Königszapfen aufweist. Der Fahrzeuganhänger (1) kann alternativ eine andere Bauform mit einer anderen Zugeinrichtung (13), z.B. einer starren oder drehbaren Deichsel (13) oder dgl. haben. Figur 15 zeigt einen solchen Fahrzeuganhänger (1) z.B. in Form eines Tiefladers mit einem Drehschemel. Der Fahrzeuganhänger (1) wird von einer Zugmaschine (36) gezogen.

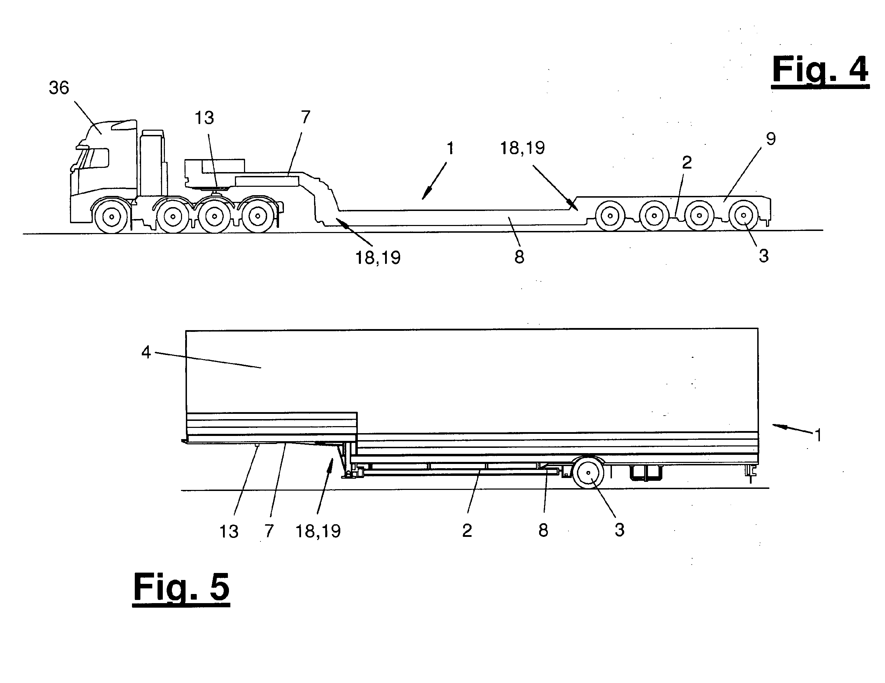

Der Fahrzeuganhänger (1) weist eine Tragstruktur bzw. ein Fahrgestell (2) und ein Fahrwerk (3) sowie eine Zugeinrichtung (13) auf. Die Tragstruktur oder das Fahrgestell (2) kann modular ausgebildet sein und ein Baukastensystem bilden. Es besteht z.B. aus zwei oder mehr Baugruppen (7,8,9). Die Baugruppen (7,8,9) können lösbar oder ggf. auch beweglich miteinander verbunden sein. Das Fahrgestell (2) unterteilt sich in der gezeigten Ausführungsform in drei Baugruppen, nämlich ein Frontteil (7), ein Mittelteil (8) und ein Heckteil (9), welches z.B. bei einer Tiefladebrücke gemäß Figur 4 eine Achsbaugruppe sein kann. Ein Heckteil kann ggf. auch ein Heckauszug sein. Alternativ kann eine zweiteilige Ausführung unter Verzicht auf das Heckteil (9) vorhanden sein. In einer weiteren Abwandlung können mehr als drei Baugruppen existieren, wobei z.B. zusätzlich ein Frontauszug vorhanden ist. Der Rahmen des Fahrgestells (2) kann außerdem in mehr als zwei Baugruppen unterteilt sein.

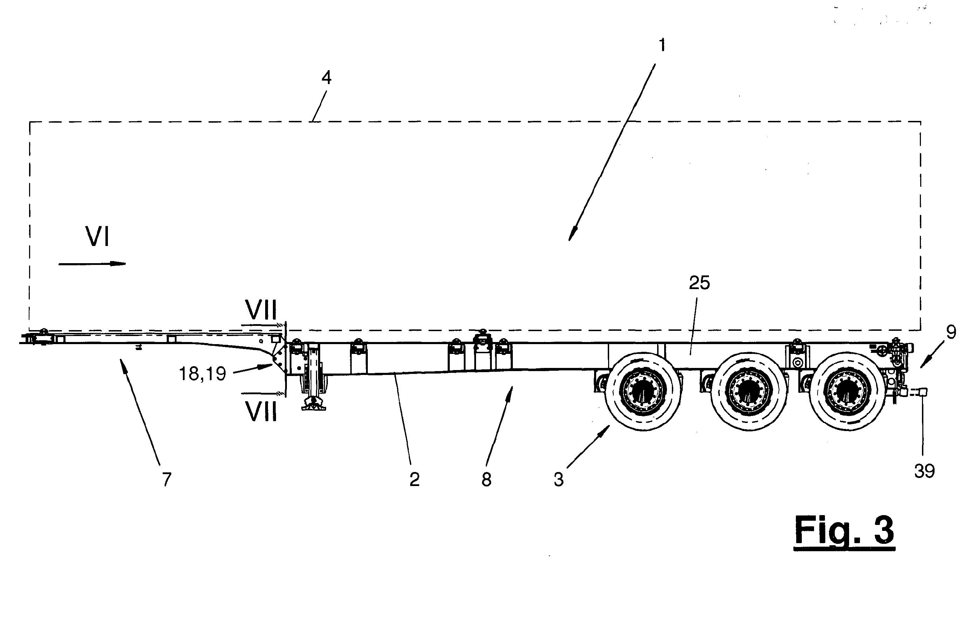

Wie Figur 3 und 5 verdeutlichen, kann das Fahrgestell (2) einen Aufbau (4) tragen. Dies kann ein Wechselaufbau sein, z.B. ein Container, eine Wechselpritsche oder dgl.. Auch ein Festaufbau mit einem Kasten, einer Pritsche oder dgl. ist möglich. Figur 4 verdeutlicht eine Variante mit einem Tieflader, der keinen Aufbau trägt.

Bei dem in Figur 15 gezeigten Tieflader für schwere Lasten, z.B. Baufahrzeuge, kann das Fahrgestell (2) aus einem Frontteil (7) mit der Zugeinrichtung (13), einem Mittelteil (8) und zwei Achsgruppen (3,3') bestehen. Unter dem Frontteil (7) ist ein Drehschemel mit der Deichsel (13) und einer Achsgruppe (3') aus ein oder zwei Achsen angeordnet. Das Mittelteil (8) bildet die Plattform oder die hauptsächliche Ladefläche. Es trägt die zweite Achsgruppe (3) mit einer, zwei oder mehr Achsen und kann am Ende bewegliche Auffahrrampen aufweisen. Das Frontteil (7) kann nach oben gegenüber dem Mittelteil (8) abgekröpft sein und ebenfalls eine Plattform, z.B. für die Schaufelablage oder dgl. aufweisen. In Abwandlung der gezeigten Ausführungsform können das Frontteil (7) und das Mittelteil (8) eine in gleicher Höhe durchgehende, gemeinsame Plattform oder Ladefläche aufweisen. In weiterer Abwandlung kann der Fahrzeuganhänger (1) einen Pritschen- oder Kastenaufbau (4) oder einen Wechselaufbau tragen. Ferner können Sonderaufbauten vorhanden sein. In einer weiteren, nicht dargestellten Variante kann der Anhänger (1) eine starre Deichsel in der Art eines Zentralachsenanhängers haben.

In der gezeigten Ausführungsform von Figur 1 bis 3 ist das Fahrgestell (2) als multifunktionales Trägerchassis ausgebildet, welches für unterschiedliche Arten und Größen, insbesondere Längen von Wechselträgern (4), z.B. Containern, geeignet ist. Es kann einen oder mehrere Wechselträger entsprechender Länge aufnehmen, die sich außerdem in Fahrzeuglängsrichtung (40) an verschiedenen Stellen positionieren lassen. Die Container können z.B. die Normlängen von 20 ft oder 40 ft und auch Zwischen- und Überlängen von z.B. 30 ft oder 45 ft aufweisen. Ein solches Trägerchassis kann auch für einen Anhängertyp gemäß Figur 15 vorgesehen sein.

Am Fahrgestell (2) sind mehrere Aufnahmen (5) vorgesehen, die z.B. als höhenverstellbare und verriegelbare Trägeraufnahmen (5,6) ausgebildet sind, die formschlüssig und sperrend in entsprechende Aufnahmeöffnungen am Aufbau oder Wechselträger (4) eingreifen. Einzelne Aufnahmen (6) können auch mittels einer Schwenkeinheit oder dgl. beweglich sein und lassen sich zwischen einer entfernten Ruhestellung und einer Arbeitsstellung hin und her bewegen. In der Arbeitsstellung können sie ggf. die anderen Trägeraufnahmen (5) in der Höhe überragen. Außerdem können am Chassis (2) mehrere beweglich, z.B. schwenkbare, Trägerstützen (17) vorhanden sein.

Das Fahrgestell (2) oder Chassis bildet eine Tragbrücke für den Aufbau (4), das Tiefladerbett, eine Plattform oder dgl.. Es ist in der Ausführung als Sattelauflieger am Heck mit einem Fahrwerk (3) ausgerüstet, welches aus einer Achsgruppe mit einer oder mehreren Achsen und Rädern nebst Federung und Radführung besteht. Im Ausführungsbeispiel von Figur 1 bis 3 ist ein dreiachsiges Fahrwerk vorhanden. Figur 4 und 5 zeigen Varianten mit einer oder vier Achsen. Das Fahrwerk (3) ist mit dem Fahrgestell (2), insbesondere seinem Mittelteil (8), verbunden. Am Fahrgestell (2) können sich ferner eine ausfahrbare Hubstütze (17) und die vorerwähnte Zugeinrichtung (13) befinden.

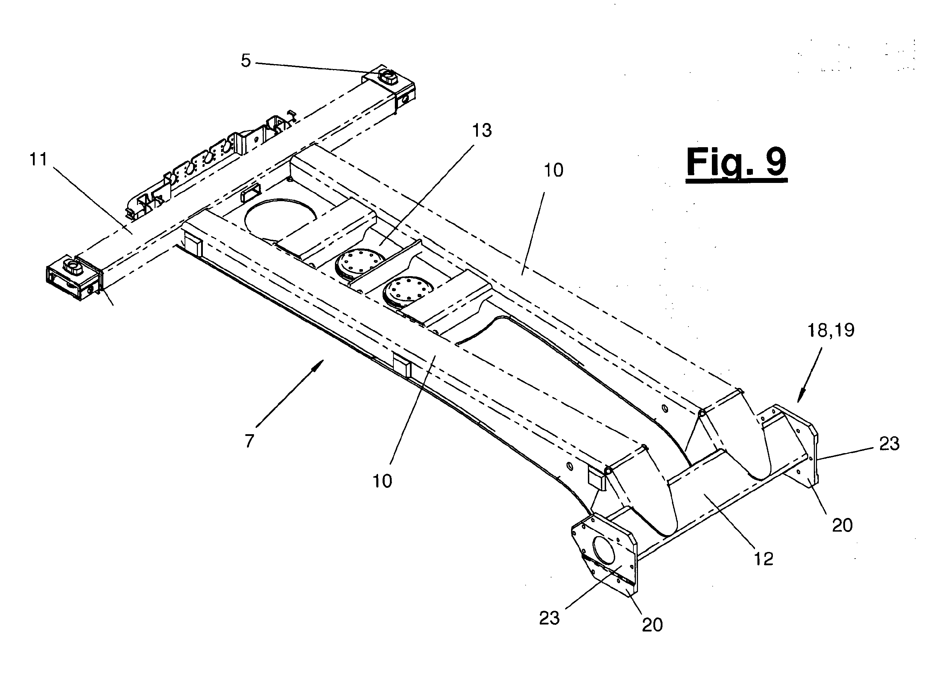

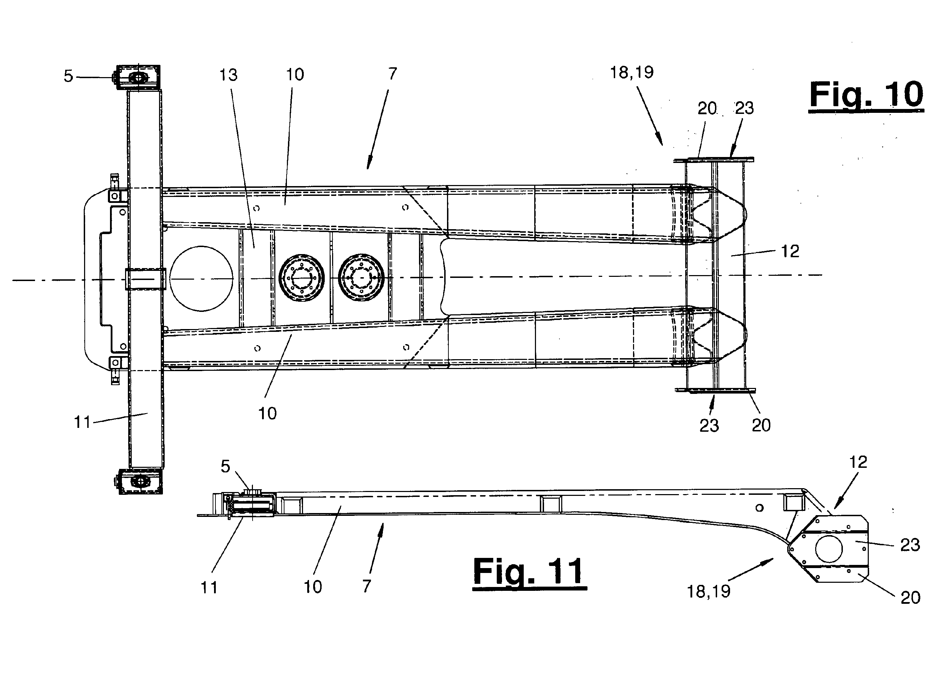

Das Frontteil (7) ist als Rahmenkonstruktion ausgeführt. In den gezeigten Ausführungsformen ist es z.B. als sog. Schwanenhals ausgebildet, welcher am rückwärtigen Ende eine abgebogene Form aufweist und sich etwas über den hinteren Fahrgestellbereich, insbesondere das Mittelteil (8) in der Höhe erhebt. Wie Figur 9 bis 11 verdeutlichen, besteht das Frontteil (7) aus zwei parallelen und seitlich beabstandeten Längsträgern (10), die am vorderen Ende durch einen breiten und seitlich überstehenden Querträger (11) miteinander verbunden sind. Hier kann sich ggf. ein Frontauszug befinden.

Die erhabenen Längsträger (10) können mit Aufnahmenuten, sog. Gooseneck-Tunnel, an der Unterseite eines Aufbaus (4) oder Containers korrespondieren und dort ggf. führend eintauchen. Alternativ kann ein Aufbau (4) oder Container auf der Oberseite der Längsträger (10) oder ggf. auch auf den Trägeraufnahmen (5) aufliegen oder schwebend abgestützt sein. In weiterer Abwandlung ist es möglich, statt eines Schwanenhalses ein Frontteil (7) in einer flachen Rahmenkonstruktion ohne vertikale Erhebung und mit Anordnung der Längs- und Querträger (10,11) in der gleichen Ebene auszubilden. Bei anderen Anhängern, z.B. dem in Figur 5 gezeigten Tieflader kann der Schwanenhals (7) eine stärkere Kröpfung als in Figur 9 bis 11 haben.

Die Längsträger (10) können am rückwärtigen und ggf. abgekröpften Ende mit einem kürzeren Querträger (12) starr verbunden sein, der an seinen beiden Stirnenden jeweils eine Stützplatte (20) zur Verbindung mit dem restlichen Fahrgestell (2), insbesondere dem Mittelteil (8) aufweist. Die Längsträger (10) sind als hohle Kastenkonstruktion ausgeführt. Zwischen ihnen befindet sich am vorderen Bereich die Zugeinrichtung (13). Sie kann ebenfalls modular ausgebildet sein und z.B. einen verstellbaren Königszapfen aufweisen. In diesem Bereich können weitere versteifende Querträger eingebaut sein.

Zur Anpassung an unterschiedliche Aufbauten (4) oder Aufbau-, Trag- oder Sattellasten, z.B. für Tank-Container, überlange Container oder dgl., kann das Frontteil (7) unterschiedlich massiv ausgebildet sein und/oder kann auch unterschiedliche Abmessungen, insbesondere Längen haben. Auch der Königszapfen kann unterschiedlich positioniert sein. Es kann schwere oder leichtere Schwanenhälse (7) geben. Der Rest des Fahrgestells (2), insbesondere ein Mittelteil (8) und/oder ein Heckteil (9) können innerhalb des Baukastensystems gleich bleiben oder ebenfalls variieren.

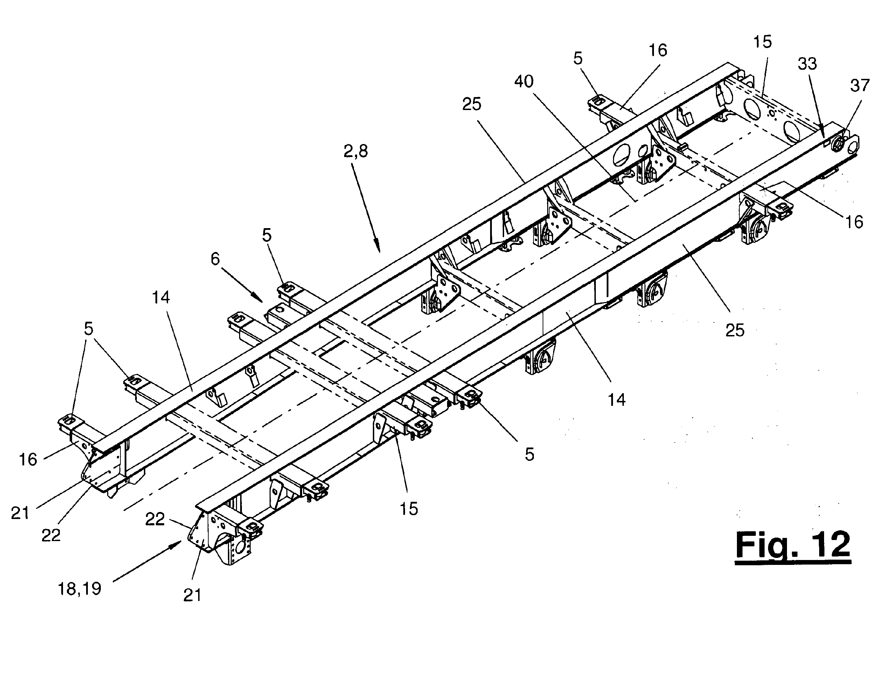

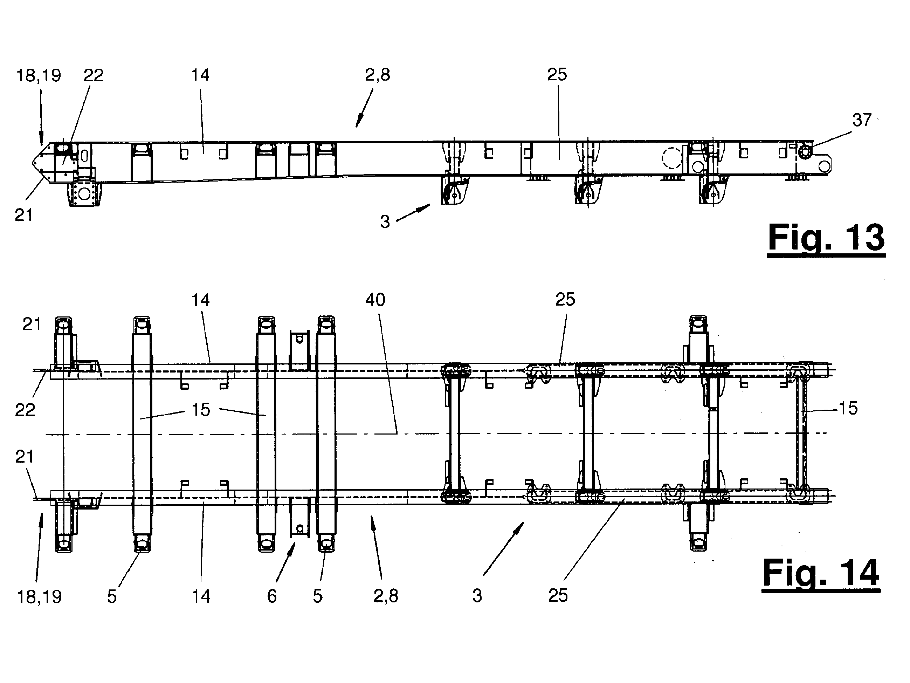

Das in Figur 12 bis 14 dargestellte Mittelteil (8) des Fahrgestells (2) ist als Rahmenkonstruktion, z.B. als Leiterrahmen, ausgeführt und besteht aus zwei parallelen und seitlich beabstandeten Längsträgern (14), die durch mehrere Querträger (15) miteinander verbunden sind. Die Längsträger (14) können in beliebiger Form ausgebildet sein. Im gezeigten Ausführungsbeispiel sind sie als Doppel-T-Träger zumindest im vorderen Bereich ausgeführt, wobei die Querträger (15) durch Öffnungen in den aufrechten Stegen der Längsträger (14) durchgesteckt und durch Laschen, Knotenbleche oder dgl. an den Längsträgern (14) fixiert sind. Die Querträger (15) ragen beidseits über die Längsträger (14) hinaus und tragen an ihren Enden jeweils eine Aufnahme (5). Sie übertragen die auftretenden statischen und dynamischen Kräfte zwischen Aufbau (4) und Fahrgestell (2).

An den Längsträgern (14) können außerdem außenseitig ein oder mehrere kürzere Ausleger (16) mit endseitigen Aufnahmen (5) stumpf angebunden sein. An derartigen Auslegern (16) können auch die vorerwähnten Schwenk- oder Verstelleinheiten für bewegliche Trägeraufnahmen (6) angeordnet sein. Im Heckbereich können zwischen die Längsträger (14) kürzere Querträger zur Abstützung der Achsen und der Federböcke von Drahtfederungen, insbesondere Luftfedern, eingezogen sein. Am Heck ist ebenfalls ein Querträger (15) angeordnet.

In der Ausführungsform von Figur 9 bis 14 können z.B. die Fahrgestellbaugruppen (7,8) lösbar miteinander verbunden sein. Hierfür weisen die Baugruppen (7,8) an ihrer Verbindungsstelle (18) z.B. mindestens eine formschlüssige Abstützung (19) auf. Diese überträgt zumindest einen Teil der auftretenden Kräfte. Dies sind vorzugsweise die vertikalen Auflagelasten und Stützkräfte. Die Zugkräfte können z.B. durch Verbindungselemente (24) übertragen werden. Alternativ oder zusätzlich kann eine weitere formschlüssige Abstützung (19) vorhanden sein, die z.B. quer zur ersten Abstützung (19) ausgerichtet ist.

In Abwandlung der gezeigten Ausführungsform kann eine solche, nachfolgend erläuterte Verbindung mit mindestens einer formschlüssigen Abstützung (19) auch zwischen anderen Fahrgestellbaugruppen, z.B. einem Mittelteil (8) und einem Heckteil (9) und/oder ein oder mehreren evtl. weiteren Mittelteilen (8) vorhanden sein.

Die Baugruppen (7,8) bzw. das Front- und Mittelteil weisen an der Verbindungsstelle (18) eine oder mehrere Gruppen von formschlüssig ineinander greifenden Stützplatten oder Scherplatten (20,21) auf. In der gezeigten Ausführungsform sind zwei Plattenpaarungen vorhanden.

Wie Figur 9 verdeutlicht, sind am rückwärtigen Ende des Frontteils (7) und insbesondere an den Stirnseiten des Querträgers (12) zwei z.B. flanschartige Stützplatten (20) angeordnet, die mit ihrer z.B. vertikalen Hauptebene längs der Fahrzeuglängsachse (40) ausgerichtet sind. Das in Figur 12 dargestellte Mittelteil (8) weist an seinem Frontende an den Längsträgern (14) ebenfalls zwei entsprechend ausgerichtete Stützplatten (21) auf. Die Plattenabstände sind aufeinander abgestimmt, so dass die Stützplatten (20,21) paarweise bei der Montage in Fahrzeuglängsrichtung ineinander geschoben werden können und dabei eng benachbart zueinander angeordnet sind. Die Stützplatten (20,21) können eine längliche Form haben und sich in Fahrzeuglängsrichtung (40) erstrecken. Alternativ können sie auch eine andere Ausrichtung haben und sich quer oder schräg zur Fahrzeuglängsrichtung (40) erstrecken.

Die gepaarten Stützplatten (20,21) weisen zur gegenseitigen formschlüssigen Abstützung geeignete Stützelemente auf. Diese sind z.B. als ineinander greifende, von der Plattenfläche quer vorspringende Erhebungen (22), z.B. Leisten, und zurückspringende Vertiefungen (23), z.B. Nuten ausgebildet. Die Leisten (22) befinden sich an den Stützplatten (21) des Mittelteils (8) und die Nuten an den Stützplatten (20) des Frontteils (7). Die Anordnung kann auch umgekehrt sein. Die Leisten (22) und Nuten (23) erstrecken sich z.B. in Fahrzeuglängsrichtung (40). Die Nuten (23) können an einer oder an beiden Stirnseiten offen sein.

Die formschlüssigen Erhebungen (22) und Vertiefungen (23) sowie die hiervon gebildeten Stützelemente müssen keine längliche Leisten- oder Nutenform haben. Sie müssen auch nicht durch eine stirnseitige Nutenöffnung axial zusammenschiebbar sein. Sie können alternativ anders ausgebildet sein, z.B. als punktuelle Buckel und Mulden in Einzel- oder Reihenanordnung. Die formschlüssigen Erhebungen (22) und Vertiefungen (23) können auch in anderer und insbesondere größerer Zahl vorhanden sein. Sie können eine andere Formgebung und eine andere Erstreckung haben.

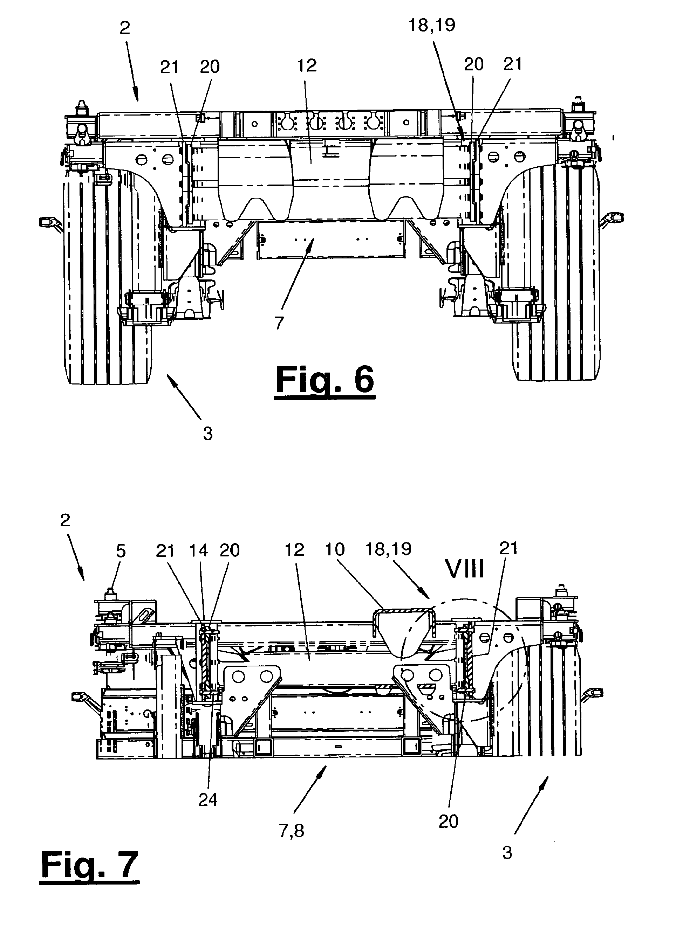

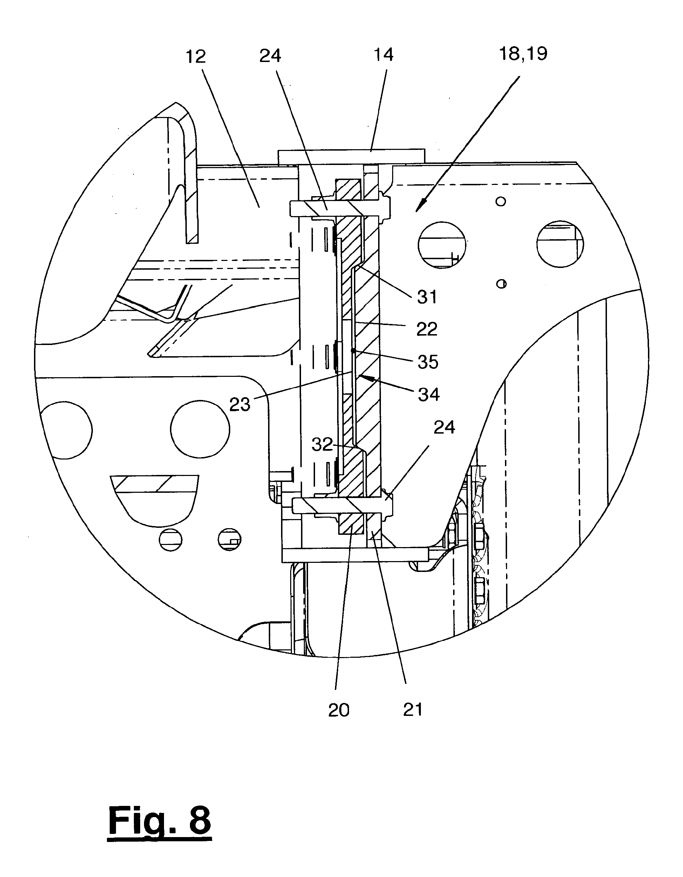

Die Stützplatten (21) des Mittelteils (8) liegen in der Montagestellung außenseitig an den Stützplatten (20) des Frontteils (7) an. Die Leisten (22) und die Nuten (23) und deren Eingriff ist in Figur 6 und 7 sowie im Detail in Figur 8 ersichtlich. Wie insbesondere Figur 8 zeigt, haben die Leisten (22) und die Nuten (23) längs laufende konische Seitenwände (31,32), die in ihrer Neigung aneinander angepasst sind, wodurch zwischen den Stützplatten (20,21) ein trichterartiges Spannsitz gebildet wird, der durch die quer durchgesteckten Verbindungselemente (24) gesichert und zusammengehalten wird. Die Leiste (22) hat z.B. konisch zum freien Ende sich verjüngende Seitenwände (31), wobei die Seitenwände (32) der Nut (23) sich konisch erweitern. Die Seitenwände (31,32) können eine ebene Form haben oder gewölbt sein. Die Stützplatten (20,21) stützen sich hierbei über die konischen Seitenwände (31,32) formschlüssig aneinander ab und übertragen die vertikalen Lasten und Stützkräfte, wobei für den Spannsitz zwischen den anderen einander zugekehrten Oberflächen der Stützplatten (20,21) ein Abstand oder Spalt (34) vorhanden sein kann.

Die Verbindungselemente (24) halten die gepaarten Stützplatten (20,21) zusammen und übertragen die anderen Kräfte, insbesondere die längsgerichteten Zugkräfte. Die Verbindungselemente (24) können hierzu in geeigneter Weise ausgebildet sein. Sie bestehen z.B. aus Schließringbolzen, insbesondere gemäß der Huck-Spin Bauweise. Diese quetschen sich beim Anziehen in die Durchgangsbohrungen der Stützplatten (20,21) und nehmen das vorhandene radiale Spiel vollkommen auf, so dass die Querkräfte und Scherkräfte über den Schaft der Verbindungselemente (24) spielfrei übertragen werden. Wie Figur 9 und 12 verdeutlichen, können an den Stützplatten (20,21) mehrere Durchgangsbohrungen für Verbindungselemente (24) in einem Kranz entlang der Außenkontur der Stützplatten (20,21) angeordnet sein. Hierdurch gibt es eine Vielzahl von stützenden Verbindungen.

Das Frontteil (7) muss keine abgekröpfte Form haben und keinen Schwanenhals oder Gooseneck bilden. Es kann sich auch in gleicher Höhe wie die angebundene Fahrgestellbaugruppe, insbesondere das Mittelteil (8), erstrecken. Ferner können die Längsträger (10,14) der Fahrgestellbaugruppe (7,8) über die formschlüssige Abstützung (19) direkt miteinander verbunden werden, wobei die zusammen wirkenden Stützplatten (20,21) innen- und außenseitig an den Längsträgern (10,14) angeordnet sind. Ein Querträger kann in diesem Fall zur Querversteifung zwischen Längsträgern angeordnet sein. Die formschlüssige Abstützung (19) bzw. die Stützplatten (20,21) können auch an anderen Fahrgestellteilen angeordnet sein.

Figur 1 bis 3 zeigen den eingangs erwähnten Heckauszug (9), der fakultativ vorhanden sein kann. Er besteht aus einem Auszugrahmen (26), der z. B. U-förmig gestaltet sein kann und aus zwei parallelen Längsholmen (27) und einem endseitigen Querholm (28) besteht, wobei der Querholm (28) seitlich über die Längsholme (27) übersteht und an den Enden Containeraufnahmen (5) tragen kann. Vom Querholm (28) kann sich ein Ausleger (38) mit zwei oder mehr Stützarmen nach unten erstrecken und am unteren Ende einen Unterfahrschutz (39) aufweisen. Dieser kann starr oder nach hinten ausziehbar am Ausleger (38) befestigt sein. Figur 3 deutet die Ausziehmöglichkeit an.

Der Auszugrahmen (26) ist mittels einer geeigneten Führung (30) am Fahrgestell (2) und z. B. am Mittelteil (8) verschiebbar angeordnet und abgestützt. In der gezeigten Ausführungsform ragen die Längsholme (27) in hohle Kastenprofile (25) der Längsträger (14), in denen eine aus mehreren frei drehbaren Stützrollen gebildete Führung (30) angeordnet ist. Der Heckauszug (9) kann manuell oder maschinell betätigt und bewegt werden. Für den Heckauszug (9) kann eine Anzeige (33) vorhanden sein, welche die aktuelle Ausfahrlänge angibt.

Am Heckbereich kann ferner eine Arretierung (37) vorhanden sein, um den Heckauszug (9) bzw. den Auszugrahmen (26) in der gewünschten Auszuglänge zu fixieren.

Abwandlungen der gezeigten und beschriebenen Ausführungsformen sind in verschiedener Weise möglich. Die Merkmale der beschriebenen Ausführungsbeispiele und ihre Abwandlungen können in beliebiger Weise miteinander kombiniert und vertauscht werden. Das Fahrzeug (1) kann auch als Kraftfahrzeug, insbesondere als LKW, ausgebildet sein. Ferner sind andere Bauformen von Fahrzeugen (1), insbesondere Anhängern, möglich, z.B. Sonderfahrzeuge, wie Glastransporter oder dgl.. Die Verbindung der Fahrgestellgruppen (7,8,9) mit der formschlüssigen Abstützung (19) und insbesondere den Stützplatten (20,21) kann lösbar sein, um Umrüstungen des Fahrzeugs (1), z.B. einen Wechsel der Frontteile (7) zu ermöglichen.

### BEZUGSZEICHENLISTE

- 1: Fahrzeuganhänger, Sattelauflieger
- 2: Fahrgestell, Chassis
- 3: Fahrwerk, Achsgruppe
- 3': Fahrwerk, Achsgruppe
- 4: Aufbau, Container
- 5: Aufnahme, Trägeraufnahme
- 6: Aufnahme, Trägeraufnahme
- 7: Baugruppe, Frontteil, Schwanenhals
- 8: Baugruppe, Mittelteil
- 9: Baugruppe, Heckteil, Heckauszug
- 10: Längsträger von Frontteil
- 11: Querträger vorn von Frontteil
- 12: Querträger hinten von Frontteil
- 13: Zugeinrichtung
- 14: Längsträger von Mittelteil
- 15: Querträger von Mittelteil
- 16: Ausleger
- 17: Stütze, Containerstütze
- 18: Verbindungsstelle
- 19: formschlüssige Abstützung
- 20: Stützplatte, Scherplatte an Frontteil
- 21: Stützplatte, Scherplatte an Mittelteil
- 22: Erhebung, Leiste
- 23: Vertiefung, Nut
- 24: Verbindungselement, Schließringbolzen
- 25: Kastenform, Kastenprofil
- 26: Auszugrahmen
- 27: Längsholm
- 28: Querholm
- 29: Antrieb
- 30: Führung
- 31: Seitenwand
- 32: Seitenwand
- 33: Anzeige
- 34: Spannsitz
- 35: Abstand, Spalt
- 36: Zugmaschine
- 37: Arretierung
- 38: Ausleger
- 39: Unterfahrschutz
- 40: Fahrzeuglängsachse

## Patentansprüche

1. Fahrzeuganhänger mit einem Fahrgestell (2) und einem Fahrwerk (3,3'), wobei das Fahrgestell (2) modular ausgebildet ist und zwei oder mehr Baugruppen (7,8,9) aufweist, die an einer Verbindungsstelle (18) mindestens eine formschlüssige Abstützung (19) aufweisen, **dadurch gekennzeichnet, dass** die Fahrgestellbaugruppen (7,8,9) für die formschlüssige Abstützung (19) eine oder mehrere Gruppen von ineinander greifenden Stützplatten oder Scherplatten (20,21) mit ineinander greifenden und längs der Fahrzeuglängsachse (40) ausgerichteten Erhebungen (22) und Vertiefungen (23) in Form von Leisten und Nuten mit konischen Seitenwänden (31,32) und einem Spannsitz (34) aufweisen.

2. Fahrzeuganhänger nach Anspruch 1, **dadurch gekennzeichnet, dass** die Stützplatten oder Scherplatten (20,21) mit ihrer vertikalen Hauptebene längs der Fahrzeuglängsachse (40) ausgerichtet sind.

3. Fahrzeuganhänger nach Anspruch 1 oder 2, **dadurch gekennzeichnet, dass** die Stützplatten (20,21) eine längliche Form haben und sich in Fahrzeuglängsrichtung (40) erstrecken.

4. Fahrzeuganhänger nach Anspruch 1, 2 oder 3, **dadurch gekennzeichnet, dass** die Plattenabstände aufeinander abgestimmt sind, wobei die Stützplatten (20,21) paarweise bei der Montage in Fahrzeuglängsrichtung ineinander geschoben werden können und dabei eng benachbart zueinander angeordnet sind.

5. Fahrzeuganhänger nach einem der vorhergehenden Ansprüche, **dadurch gekennzeichnet, dass** der Spannsitz (34) einen Abstand (35) zwischen der Erhebung (22) und der Vertiefung (23) aufweist.

6. Fahrzeuganhänger nach einem der vorhergehenden Ansprüche, **dadurch gekennzeichnet, dass** die gepaarten Stützplatten (20,21) durch mehrere Verbindungselemente (24) zusammengehalten sind.

7. Fahrzeuganhänger nach Anspruch 6, **dadurch gekennzeichnet, dass** die Verbindungselemente (24) als Schließringbolzen ausgebildet sind.

8. Fahrzeuganhänger nach Anspruch 6 oder 7, **dadurch gekennzeichnet, dass** an den Stützplatten (20,21) mehrere Durchgangsbohrungen für Verbindungselemente (24) in einem Kranz entlang der Außenkontur der Stützplatten (20,21) angeordnet sind.

9. Fahrzeuganhänger nach einem der vorhergehenden Ansprüche, **dadurch gekennzeichnet, dass** die Fahrgestellbaugruppen (7,8,9) Längsträger (10,14) und Querträger (11,12,15) aufweisen, wobei die Stützplatten oder Scherplatten (20,21) an den Längträgern (10,14) oder an Längsträgern und Querträgern (10,11,12,14,15) angeordnet sind.

10. Fahrzeuganhänger nach einem der vorhergehenden Ansprüche, **dadurch gekennzeichnet, dass** eine Fahrgestellbaugruppe (7) als Frontteil (7), insbesondere als Schwanenhals, ausgebildet ist und am rückwärtigen Ende einen Querträger (12) mit zwei endseitigen Stützplatten (20) aufweist.

11. Fahrzeuganhänger nach einem der Ansprüche 1 bis 8, **dadurch gekennzeichnet, dass** Längsträger (10,14) der Fahrgestellbaugruppen (7,8) über die formschlüssige Abstützung (19) direkt miteinander verbindbar sind, wobei die zusammen wirkenden Stützplatten (20,21) innen- und außenseitig an den Längsträgern (10,14) angeordnet sind.

12. Fahrzeuganhänger nach einem der vorhergehenden Ansprüche, **dadurch gekennzeichnet, dass** die vordere Fahrgestellbaugruppe (7) eine Zugeinrichtung (13), insbesondere einen Königszapfen oder eine Deichsel, aufweist.

13. Fahrzeuganhänger nach einem der vorhergehenden Ansprüche, **dadurch gekennzeichnet, dass** eine Fahrgestellbaugruppen (8) als Rahmen mit Längsund Querträgern (14,15) ausgebildet ist, wobei die Längsträger (14) am vorderen Ende zwei Stützplatten (21) aufweisen

14. Fahrzeuganhänger nach einem der vorhergehenden Ansprüche, **dadurch**
**gekennzeichnet, dass** das Fahrgestell (2) einen Heckauszug (9) aufweist.

15. Fahrzeuganhänger nach einem der vorhergehenden Ansprüche, **dadurch gekennzeichnet, dass** am Fahrgestell (2) mehrere verstellbare Aufnahmen (5,6) für einen lösbaren Aufbau (4), insbesondere eine Wechselpritsche oder einen Container, angeordnet sind.

## Claims

1. Vehicle trailer having a chassis (2) and having a running gear (3, 3'), wherein the chassis (2) is of modular form and has two or more assemblies (7, 8, 9) which have at least one positively locking support (19) at a connecting point (18), **characterized in that**, for the positively locking support (19), the chassis assemblies (7, 8, 9) have one or more groups of support plates or shear plates (20, 21) which engage into one another, said support plates or shear plates having elevations (22) and depressions (23) which engage into one another and which are aligned along the vehicle longitudinal axis (40) and which are in the form of rails and grooves with conical side walls (31, 32) and having a clamping fit (34).

2. Vehicle trailer according to Claim 1, **characterized in that** the support plates or shear plates (20, 21) are aligned with their vertical main plane along the vehicle longitudinal axis (40).

3. Vehicle trailer according to Claim 1 or 2, **characterized in that** the support plates (20, 21) have an elongate form and extend in the vehicle longitudinal direction (40).

4. Vehicle trailer according to Claim 1, 2 or 3, **characterized in that** the plate spacings are coordinated with one another, wherein, during assembly, the support plates (20, 21) can be pushed into one another in pairs in the vehicle longitudinal direction, and here, are arranged closely adjacent to one another.

5. Vehicle trailer according to one of the preceding claims, **characterized in that** the clamping fit (34) has a spacing (35) between the elevation (22) and the depression (23).

6. Vehicle trailer according to one of the preceding claims, **characterized in that** the paired support plates (20, 21) are held together by a plurality of connecting elements (24).

7. Vehicle trailer according to Claim 6, **characterized in that** the connecting elements (24) are formed as locking ring bolts.

8. Vehicle trailer according to Claim 6 or 7, **characterized in that**, on the support plates (20, 21), a plurality of through bores for connecting elements (24) are arranged in a ring along the outer contour of the support plates (20, 21).

9. Vehicle trailer according to one of the preceding claims, **characterized in that** the chassis assemblies (7, 8, 9) have longitudinal beams (10, 14) and transverse beams (11, 12, 15), wherein the support plates or shear plates (20, 21) are arranged on the longitudinal beams (10, 14) or on longitudinal beams and transverse beams (10, 11, 12, 14, 15).

10. Vehicle trailer according to one of the preceding claims, **characterized in that** one chassis assembly (7) is formed as a front part (7), in particular as a gooseneck, and at the rear end has a transverse beam (12) with two support plates (20) on the ends.

11. Vehicle trailer according to one of Claims 1 to 8, **characterized in that** longitudinal beams (10, 14) of the chassis assemblies (7, 8) can be directly connected to one another by means of the positively locking support (19), wherein the interacting support plates (20, 21) are arranged at the inside and at the outside on the longitudinal beams (10, 14).

12. Vehicle trailer according to one of the preceding claims, **characterized in that** the front chassis assembly (7) has a towing device (13), in particular a kingpin or a towing bar.

13. Vehicle trailer according to one of the preceding claims, **characterized in that** one chassis assembly (8) is formed as a frame with longitudinal and transverse beams (14, 15), wherein the longitudinal beams (14) have two support plates (21) on the front end.

14. Vehicle trailer according to one of the preceding claims, **characterized in that** the chassis (2) has a rear extension (9).

15. Vehicle trailer according to one of the preceding claims, **characterized in that** a plurality of adjustable receptacles (5, 6) for a detachable superstructure (4), in particular an interchangeable platform or a container, are arranged on the chassis (2).

## Revendications

1. Remorque de véhicule comprenant un châssis (2) et un train de roulement (3, 3'), le châssis (2) étant réalisé sous forme modulaire et présentant deux ou plus de deux modules (7, 8, 9) qui présentent, au niveau d'une zone de liaison (18), au moins un support (19) à engagement positif, **caractérisée en ce que** les modules de châssis (7, 8, 9) pour le support (19) à engagement positif présentent un ou plusieurs groupes de plaques de support ou de plaques de cisaillement (20, 21) s'engageant les unes dans les autres et des rehaussements (22) et renfoncements (23) orientés le long de l'axe longitudinal du véhicule (40) en forme de languettes et rainures avec des parois latérales coniques (31, 32) et un siège de serrage (34).

2. Remorque de véhicule selon la revendication 1, **caractérisée en ce que** les plaques de support ou les plaques de cisaillement (20, 21) sont orientées avec leur plan principal vertical le long de l'axe longitudinal du véhicule (40).

3. Remorque de véhicule selon la revendication 1 ou 2, **caractérisée en ce que** les plaques de support (20, 21) ont une forme allongée et s'étendent dans la direction longitudinale du véhicule (40).

4. Remorque de véhicule selon la revendication 1, 2 ou 3, **caractérisée en ce que** les espacements des plaques sont ajustés les uns aux autres, les plaques de support (20, 21) pouvant être poussées les unes dans les autres par paires dans la direction longitudinale du véhicule lors du montage et étant ainsi disposées étroitement les unes à côté des autres.

5. Remorque de véhicule selon l'une quelconque des revendications précédentes, **caractérisée en ce que** le siège de serrage (34) présente une distance (35) entre le rehaussement (22) et le renfoncement (23).

6. Remorque de véhicule selon l'une quelconque des revendications précédentes, **caractérisée en ce que** les plaques de support appariées (20, 21) sont maintenues ensemble par plusieurs éléments de liaison (24).

7. Remorque de véhicule selon la revendication 6, **caractérisée en ce que** les éléments de liaison (24) sont réalisés sous forme de boulons à bague de serrage.

8. Remorque de véhicule selon la revendication 6 ou 7, **caractérisée en ce que** sur les plaques de support (20, 21) plusieurs alésages traversants pour des éléments de liaison (24) sont réalisés en couronne le long du contour extérieur des plaques de support (20, 21).

9. Remorque de véhicule selon l'une quelconque des revendications précédentes, **caractérisée en ce que** les modules de châssis (7, 8, 9) présentent des supports longitudinaux (10, 14) et des traverses (11, 12, 15), les plaques de support ou les plaques de cisaillement (20, 21) étant disposées sur les supports longitudinaux (10, 14) ou sur les supports longitudinaux et sur les traverses (10, 11, 12, 14, 15).

10. Remorque de véhicule selon l'une quelconque des revendications précédentes, **caractérisée en ce qu'**un module de châssis (7) est réalisé sous forme de partie avant (7), en particulier en queue d'aronde, et présente à l'extrémité arrière une traverse (12) avec deux plaques de support (20) du côté de l'extrémité.

11. Remorque de véhicule selon l'une quelconque des revendications 1 à 8, **caractérisée en ce que** les supports longitudinaux (10, 14) des modules de châssis (7, 8) peuvent être connectés directement les uns aux autres par le biais du support (19) à engagement positif, les plaques de support (20, 21) coopérant les unes avec les autres étant disposées du côté intérieur et extérieur sur les supports longitudinaux (10, 14).

12. Remorque de véhicule selon l'une quelconque des revendications précédentes, **caractérisée en ce que** le module de châssis avant (7) présente un dispositif de traction (13), notamment une cheville ouvrière ou un timon.

13. Remorque de véhicule selon l'une quelconque des revendications précédentes, **caractérisée en ce qu'**un module de châssis (8) est réalisé sous forme de cadre avec des supports longitudinaux et des traverses (14, 15), les supports longitudinaux (14) présentant à l'extrémité avant deux plaques de support (21).

14. Remorque de véhicule selon l'une quelconque des revendications précédentes, **caractérisée en ce que** le châssis (2) présente une extension arrière (9).

15. Remorque de véhicule selon l'une quelconque des revendications précédentes, **caractérisée en ce que** plusieurs logements réglables (5, 6) pour une structure amovible (4), en particulier un châssis amovible ou un conteneur, sont disposés sur le châssis (2).
